(19) Europäisches Patentamt

European Patent Office

Office européen des brevets

(11) Publication number: **0 449 796 A2**

# (12) EUROPEAN PATENT APPLICATION

(21) Application number: 91870051.9

(22) Date of filing: 26.03.91

(51) Int. Cl.$^5$: **C08L 75/04, C08L 25/00, C08L 33/04, C08L 25/10, C08L 25/12**

(30) Priority: 27.03.90 GB 9006805

(43) Date of publication of application: 02.10.91 Bulletin 91/40

(84) Designated Contracting States: AT BE CH DE DK ES FR GB GR IT LI LU NL SE

(71) Applicant: MONSANTO COMPANY 800 North Lindbergh Boulevard St. Louis Missouri 63167 (US)

(72) Inventor: Dufour, Daniel
45, Avenue du Fort Jaco
B-1180 Brussels (BE)
Inventor: Ruelle, Robert
53, Résidence la Prairie
B-7410 Ghlin (BE)
Inventor: Cannon, Maureen Anne
45, Avenue H Boulenger
B-1180 Brussels (BE)

(74) Representative: Ernst, Hubert et al
Monsanto Services International S.A., Patent Department, Avenue de Tervuren 270-272, Letter Box No. 21
B-1150 Brussels (BE)

(54) Polyurethane-terpolymer blends.

(57) The invention relates to polyurethane-terpolymer blends having desirable physical properties with respect to the processing thereof and the articles made therefrom. The terpolymer contains selective proportions of a vinylaromatic monomer, a polymerisable unsaturated dicarboxylic acid, and a polymerisable ester of an unsaturated carboxylic acid. The polyblends can optionally contain a further polymeric ingredient such as acrylonitrile-butadiene-styrene or methyl methacrylate-butadiene-styrene.

EP 0 449 796 A2

This invention relates to polymeric blends based on polyurethane and particularly to certain new polyblends containing a polyurethane and a polymer containing carboxylgroups. The claimed polyblends have desirable physical properties with respect to both the processing thereof and the articles made therefrom.

Unless stated otherwise, all proportions and percentages mentioned herein are by weight.

The prior art relative to polyurethane-polymer blends is crowded and diverse. US-A-3.426.099 discloses thermoplastic polyester urethane elastomer containing additive levels of a copolymer of styrene and maleic anhydride. EP-B-0.192.230 discloses polymer blends containing polyurethanes, a styrene-maleic anhydride and a polymeric nitrile. Blends of polyurethane resin with a copolymer of styrene and 8 % maleic anhydride are briefly mentioned in US-A-4.287.314.

The state-of-the-art relative to polyurethane-based polymer blends is known to deserve further improvements in particular for maintaining processing characteristics while improving physical properties such as heat resistance, and stiffness, of the article and vice-versa.

The present invention is based, in part, on the discovery that polyurethane based polyblends can be formulated which are easily processable and which show superior physical properties when formed into an article. The blend herein is particularly useful for injection molding and other thermoplastic processing and combines good impact strength, tensile strength and heat resistance with a medium flexural modulus.

The polyurethane based polyblends of the invention herein comprise :

1. from 25 % to 95 % of a polyurethane;

2. from 5 % to 75 % of a terpolymer having an intrinsic viscosity in accordance with ASTM-D2857, 25°C, methyl-ethylketone, of at least 0.26, said terpolymer comprising:

   a) from 20 % to 80 % of a vinylaromatic monomer;

   b) from 15 % to 30 % of a polymerisable unsaturated dicarboxylic acid ; and

   c) from 5 % to 50 % of a polymerisable ester of an unsaturated carboxylic acid ;

3. from 0 to 25 % of a further polymeric component.

The invention also comprises processes of producing articles by means of conventional techniques inclusive of extrusion (for example a profile or a film), injection-moulding or blow-moulding thereby utilising the polyurethane based polyblend in accordance with the invention herein.

The polyurethane component can be represented by all known polyurethanes as such or possibly prepared in situ. Suitable polyurethanes can, for example, be linear or crosslinked and can be derived from polyesters and polyethers. In one preferred execution of the invention, the polyurethanes are derived from polyethers.

The polyurethane component is used generally in levels ranging from 25% to 95%. In one preferred aspect of the invention the polyurethane is used in levels of from 30% to 50% in combination with from 50% to 70% of the terpolymer. The purpose of such combinations aims at increasing strengths and heat resistance as may be required in the application of the polyblends in, for example, the automotive industry and also with respect to ski boots.

In another preferred aspect, the polyurethane is used in levels of from 50% to 80% in combination with from 20% to 50% of the terpolymer. The like combinations exhibit improved heat resistance while maintaining good flexibility. Such preferred blends can, for example, be utilised benefically in cables, pipes, flexible films and tapes.

The essential terpolymer component is used in an amount from 5% to 75%, preferably from 20% to 70%. The monomers in the terpolymer are represented by: a vinylaromatic monomer; a polymerisable unsaturated dicarboxylic acid; and a polymerisable ester of an unsaturated carboxylic acid. The levels of these monomers are expressed by reference to the terpolymer (100%).

The vinylaromatic monomer represents from 20% to 80%, preferably from 30% to 70%. The vinylaromatic hydrocarbon monomer is preferably styrene although hydrocarbon derivatives of styrene such as lower-$C_1$-$C_6$-alkylstyrenes for example alpha-methyl styrene, and also vinyltoluene are useful.

The polymerisable unsaturated dicarboxylic acid usually represents from 15% to 30% and preferably from 20% to 30%. The term "dicarboxylic acid" as used herein is meant to embrace acid species and/or anhydride species of said dicarboxylic acid. The most preferred dicarboxylic acid monomer is maleic acid although other species inclusive of chloromaleic acid, methylmaleic acid, sulfomaleic acid, phenyl- or benzylmaleic acid, fumaric acid, mesaconic acid, and aconitic acid and mixtures of such acid monomers inclusive of maleic acid can also be used.

The polymerisable ester of an unsaturated carboxylic acid generally represents from 5% to 50%. In one preferred embodiment said polymerisable ester can advantageously represent from 5% to 15% depending upon the proportions of the other monomers in the terpolymer, the desired end-use properties of the polyblend and the chemical nature of the vinylaromatic monomer and the unsaturated dicarboxylic acid. In another preferred embodiment herein said polymerisable ester is benefically present in a level from 30% to 50%, the selection criteria being as referred to in the preceding sentences, namely the quantitative and qualitative nature of the monomers in the terpolymer and desirable end-use properties. It is recognized, however, that said polymerisable ester can be used, depending upon the selection criteria described in the preceding sentences, at any level within the broad 5% to 50% range. The ester monomer is preferably methyl methacrylate although functionally related species inclusive of methyl acrylate, ethyl acrylate, ethyl methacrylate and butyl acrylate can be used. Mixtures of such ester monomers can also be used.

The essential terpolymer component is further characterised by an intrinsic viscosity, measured at 25°C in methylethylketone in accordance with ASTM-D2857, of at least 0.26, preferably from 0.31 to 0.38.

The polyblends herein further can contain broadly, as an optional component, from 0 to 40% preferably from 20% to 40% of a further polymeric component. This optional polymer can be represented, for example, by conventional acrylonitrile-butadiene-styrene copolymer (ABS) and methyl methacrylate-butadiene-styrene copolymer (MBS).

The components of the polyblend can be blended together by conventional techniques which are known to be suitable therefor. Such techniques can involve mechanical shear at an elevated temperature, for example in an extruder, a Banbury mixer or a calendering unit.

The polyblends can contain one or a series of conventional additives which are used for their art-established functionality in levels possibly from 0 to 2 % or even more. Examples of the like additives and optionals include : antioxidants, fillers, flame retardants, colourants, stabilisers, plasticizers, light stabilisers, etc.

The polyblends herein are especially useful for applications requiring superior physical properties such as heat resistance impact properties, tensile strength, etc. Such applications are, for example automotive parts, packaging, cables, pipes, flexible films, tapes, etc.

The invention is illustrated by the following examples.

## EXAMPLES

In the following Examples, a number of polyblends were prepared and calendered into films, and the Vicat softening point, Charpy impact strength, hardness, IZOD impact strength and flexural modulus of each film were measured.

TABLE 1

| COMPOSITION | POLYETHERPOLY-URETHANE (2) | | POLYESTERPOLY-URETHANE (3) | | TERPOLYMER (1) | | FURTHER POLYMERIC COMPONENT (4) |
|---|---|---|---|---|---|---|---|
| A | : | 100 | : | - | : | - | : | - |
| B | : | - | : | 100 | : | - | : | - |
| Ex. 1 | : | | : | 85 | : | 7,5 | : | 7,5 |
| Ex. 2 | : | - | : | 75 | : | 12,5 | : | 12,5 |
| Ex. 3 | : | | : | 50 | : | 25 | : | 25 |
| Ex. 4 | : | | : | 40 | : | 30 | : | 30 |
| Ex. 5 | : | 85 | : | - | : | 7,5 | : | 7,5 |
| Ex. 6 | : | 75 | : | - | : | 12,5 | : | 12,5 |
| Ex. 7 | : | 50 | : | - | : | 25 | : | 25 |
| Ex. 8 | : | 40 | : | - | : | 30 | : | 30 |
| Ex. 9 | : | 70 | : | - | : | 30 | : | - |

(1)  The terpolymer was represented by a styrene maleic anhydride methyl methacrylate copolymer (68% styrene, 25% maleic anhydride, 7% methyl methacrylate).

(2)  MDI[*]-based thermoplastic polyether polyurethane compound from The B.F. Goodrich Company.

(3)  MDI[*]-based thermoplastic polyester polyurethane compound from The B.F. Goodrich Company.

(4)  The further polymeric component was represented by an acrylonitrile-butadiene-styrene (ABS) copolymer (styrene-acrylonitrile (ratio 70/30), butadiene level 37.5%).

[*]Methylene diphenyl di-isocyanate.

Compositions A and B relate to specific polyurethane polymers which serve for comparative purposes. Examples 1 through 9 embody the technology in accordance with the invention.

The terpolymer was prepared by continuous mass polymerisation of the constituent monomers.

The individual compositions of Table 1 (A, B, Ex 1-9) were blended on a Schwabenthan laboratory two-roll mill. A 100 gram sample was processed for 5 minutes with the back roll at a temperature of 180°C and rotating at 21 revolutions per minute and the front roll at 190°C rotating at 24 revolutions per minute. The sample was calendered into a film 1 mm thick. To make samples for the different measurements several layers of film were compressed at 180°C into a plaque 3.2 mm thick.

The physical characteristics of the individual compositions are reported hereinafter:

TABLE 2

| COMP-OSITION Ex. | FLEXURAL MODULUS (M.Pa)(5) | IMPACT CHARPY(6) UNNOTCHED | HARDNESS (7)SHORE | VICAT(8) 10 N | IZOD(9) |
|---|---|---|---|---|---|
| : A : | 21.3 | : 100% – NB | : 85(A) : | : 90 : | NB : |
| : B : | 40,5 | : 100% – NB | : 93(A) : | : 92 : | NB : |
| : 1 : | 90 | : 100% – NB | : 39(D) : | : 94.8 : | NB : |
| : 2 : | 188 | : 100% – NB | : 45(D) : | : 95.8 : | NB : |
| : 3 : | 855 | : 100% – NB | : 61(D) : | : 105.2 : | 681 : |
| : 4 : | 982 | : 100% – NB | : 65(D) : | : 114.9 : | 618 : |
| : 5 : | 49 | : 100% – NB | : 36(D) : | : 96.2 : | NB : |
| : 6 : | 88 | : 100% – NB | : 39(D) : | : 98.8 : | NB : |
| : 7 : | 435 | : 100% – NB | : 51(D) : | : 118.1 : | 575 : |
| : 8 : | 718 | : 100% – NB | : 54(D) : | : 117.2 : | 148 : |
| : 9 : | – | : – – : | – : | : 106.9 : | 642 : |

(5)   Flexural Modulus 23°C – M.Pa; ISO 179-1982

(6)   Impact Charpy – Unnotched $K.J/m^2$ – 23°C; ISO 179-1982

(7)   Hardness DIN – 53505 23°C – Shore A or D

(8)   Vicat  ISO – 306-1974

(9)   IZOD impact notched ISO 180 – 1982 J/M.

The foregoing data contirm the improved properties of the polyblends of the invention. In particular, very desirable improvements in stiffness and heat resistance can be secured while maintaining still good impact.

The polyblends in accordance with this invention having the composition hereinafter were prepared as described hereinbefore.

## TABLE 3

| : COMPOSITION : | POLYESTERPOLY-URETHANE : | TERPOLYMER : |
|---|---|---|
| : Ex. 10 : | 60 : | $40^{(10)}$ : |
| : Ex. 11 : | 60 : | $40^{(11)}$ : |

(10) Terpolymer containing:
| | |
|---|---|
| styrene | 69.5 |
| methyl methacrylate | 6 |
| maleic anhydride | 24.5 |

(11) Terpolymer containing:
| | |
|---|---|
| styrene | 63 |
| methyl methacrylate | 11.2 |
| maleic anhydride | 25.8 |

The intrinsic viscosity and the notched Izod impact measured at room temperature were found as follows:

| | INTRINSIC VISCOSITY | IZOD IMPACT NOTCHED (9) |
|---|---|---|
| Ex. 10 | 0.31 | 74 |
| Ex. 11 | 0.31 | 356 |

These data show that for substantially identical molecular weight, as measured by intrinsic viscosity, an increased methyl methacrylate level in the terpolymer will yield considerably improved impact.

## Claims

1. A polyblend comprising:
   1. from 25% to 95% of a polyurethane;
   2. from 5% to 75% of a terpolymer having an intrinsic viscosity, in accordance with ASTM-D2857, 25°C, methyl-ethylketone, of at least 0.26, said terpolymer comprising:
      a) from 20% to 80% of a vinylaromatic monomer;
      b) from 15% to 30% of a polymerisable unsaturated dicarboxylic acid; and
      c) from 5% to 50% of a polymerisable ester of an unsaturated carboxylic acid;
   3. from 0 to 40% of a further polymeric component.

2. The polyblend in accordance with Claim 1 wherein the polyurethane represents from 30% to 50% and the terpolymer from 50% to 70%.

3. The polyblend in accordance with Claim 1 wherein the polyurethane represents from 50% to 80% and the terpolymer from 20% to 50%.

4. The polyblend in accordance with Claim 1 wherein the monomers in the terpolymer, expressed by reference to the terpolymer (100%), are represented by:
   – from 30% to 70% of the vinylaromatic monomer; and
   – from 20% to 30% of the polymerisable unsaturated dicarboxylic acid,

5. The polyblend in accordance with Claims 1 and 4 wherein the polymerisable ester of the unsaturated carboxylic acid represents from 5% to 15%.

6. The polyblend in accordance with Claims 1 and 4 wherein the polymerisable ester of the unsaturated carboxylic acid represents from 30% to 50%.

7. The polyblend in accordance with Claim 1 and 4 wherein the further polymeric component represents from 20% to 40%.

8. The polyblend in accordance with Claims 1 and 7 wherein the further polymeric component is acrylonitrile-butadiene-styrene or methyl methacrylate-butadiene-styrene.

9. The polyblend in accordance with Claims 1, 4 and 7 wherein: the polyurethane is derived from polyethers and polyesters; the monomers in the terpolymer are represented by styrene, maleic acid and methyl methacrylate.

10. The polyblend in accordance with Claims 8 and 9 wherein the intrinsic viscosity is from 0.31 to 0.38.

11. A process of producing an article by extrusion, injection molding or blow-molding of the polyblend in accordance with any of the foregoing claims.